# EUROPÄISCHE PATENTANMELDUNG

(11) **EP 0 825 061 A2**
(43) Veröffentlichungstag der Anmeldung: **25.02.1998**
(21) Anmeldenummer: 97112026.6
(22) Anmeldetag: 15.07.1997
(51) Int. Cl.: B60N 2/48

(54) **Kopfstütze für einen Fahrzeugsitz**

(30) Priorität: 16.08.1996 DE 29614238 U
(71) Anmelder: TRW Occupant Restraint Systems GmbH, 73551 Alfdorf (DE)
(72) Erfinder: Heilig, Alexander, 73550 Wissgoldingen (DE); Maiwald, Helmut, 73579 Schechingen (DE)
(74) Vertreter: Kitzhofer, Thomas, Dipl.-Ing.

(57) **Zusammenfassung**

Eine Kopfstütze für einen Fahrzeugsitz, mit einem an der Rückenlehne (5) des Fahrzeugsitzes befestigbaren Gestell (3) und einem schwenkbar am Gestell (3) befestigten Auflageteil (9), das bei einem Heckaufprall durch eine an ihm angreifende Einrichtung in Richtung zum Kopf des Fahrzeuginsassen geschwenkt wird, ist dadurch gekennzeichnet, daß die Einrichtung wenigstens eine in der Kopfstütze (1) integrierte, gespannte Feder (21) umfaßt, die bei einem Heckaufprall entspannt wird und durch die freiwerdende gespeicherte Energie zum Verschwenken des Auflageteils (9) führt.

## Beschreibung

Die Erfindung betrifft eine Kopfstütze für einen Fahrzeugsitz, mit einem an der Rückenlehne des Fahrzeugsitzes befestigbaren Gestell und einem schwenkbar an dem Gestell befestigten Auflageteil, das bei einem Heckaufprall durch eine an ihm angreifende Einrichtung in Richtung zum Kopf des Fahrzeuginsassen geschwenkt wird.

Die Kopfstütze eines Fahrzeugsitzes hat die Aufgabe, bei einem Heckaufprall den Kopf des Insassen nach hinten abzustützen. Da jedoch normalerweise zwischen der Kopfstütze und dem Kopf des Insassen ein relativ großer Abstand vorhanden ist, wird bei einem Heckaufprall zunächst der Kopf des Insassen relativ zum Fahrzeugsitz nach hinten geschleudert, bis er auf die Kopfstütze auftrifft. Dies bewirkt eine Scherbewegung im Nackenwirbelbereich, die häufig ein Schleudertrauma verursacht.

Aus der DE 296 03 991 ist ein Fahrzeugsitz mit einer Kopfstütze bekannt, bei dem durch das Innere der Rückenlehne ein biegsames Zugelement gespannt ist. Dieses wird durch Eindrücken des Insassen in die Rückenlehne bei einem Heckaufprall durchgebogen und ruft eine Verschiebung einer kopfstützenseitigen Befestigung des Zugelements hervor. Dies führt zu einer Schwenkbewegung der Kopfstütze in Richtung zum Kopf des Insassen. Die Einrichtung zum Schwenken des Auflageteils ist bei der bekannten Kopfstütze teilweise in der Rückenlehne integriert.

Die Erfindung schafft eine Kopfstütze, bei der die Einrichtung zum Schwenken des Auflageteils in der Kopfstütze selbst integriert ist, so daß der bauliche Aufwand relativ gering gehalten werden kann. Dadurch ist es auch möglich, die bislang bekannten Konstruktionen der Rückenlehne beizubehalten. Dies wird bei einer Kopfstütze der eingangs genannten Art erfindungsgemäß dadurch erreicht, daß die Einrichtung wenigstens eine in der Kopfstütze integrierte, gespannte Feder umfaßt, die bei einem Heckaufprall entspannt wird und durch die freiwerdende gespeicherte Energie zum Verschwenken des Auflageteils führt. Bei der erfindungsgemäßen Kopfstütze ist in der Kopfstütze selbst ein Energiespeicher in Form einer vorgespannten Feder enthalten. Externe Energiespeicher sind überflüssig. Es ist ferner möglich, bislang eingebaute, nicht aktive Kopfstützen durch die erfindungsgemäße, aktive Kopfstütze zu ersetzen.

Bei der bevorzugten Ausführungsform ist die Feder eine Biegefeder, die mit einem ersten Ende am Gestell und in gespanntem Zustand mit dem entgegengesetzten, zweiten Ende an einem gestellfesten, als Trägheitssensor ausgebildeten Betätigungssensor angreift, der das zugeordnete Ende bei einem Heckaufprall freigibt. Die Biegefeder liegt nahe des zweiten Endes am Auflageteil an, um es beim schlagartigen Entspannen der Biegefeder mitzunehmen. Der Betätigungssensor ist vorzugsweise ein aufgrund seiner Massenträgheit schwenkbarer Rasthebel, und die Biegefeder ist vorzugsweise um das Schwenklager des Auflageteils gebogen.

Um zu vermeiden, daß beim Auftreffen des Kopfes auf die Kopfstütze der hierdurch erzeugte Impuls ein ungehindertes Zurückschwenken des Auflageteils hervorruft, ist bei der bevorzugten Ausführungsform eine Sperrvorrichtung in der Kopfstütze integriert, die das Auflageteil in seiner vordersten Schwenkstellung verriegelt.

Ferner ist die Einrichtung bevorzugt so ausgebildet, daß die Feder nach einer Auslösung der Kopfstütze durch Schwenken des Auflageteils zurück in die Ausgangsstellung wieder gespannt und die Kopfstütze in der Ausgangsstellung verriegelt werden kann, so daß es nicht notwendig ist, die Kopfstütze nach einem Heckaufprall gegen eine neue, noch nicht betätigte Kopfstütze auszutauschen.

Weitere Merkmale und Vorteile der Erfindung ergeben sich aus der nachfolgenden Beschreibung einer bevorzugten Ausführungsform und aus den Zeichnungen, auf die Bezug genommen wird. In den Zeichnungen zeigen:
- Fig. 1 eine schematische Seitenansicht einer bevorzugten Ausführungsform der erfindungsgemäßen Kopfstütze in nicht betätigtem Zustand, und
- Fig. 2 die Kopfstütze nach Fig. 1 in betätigtem Zustand.

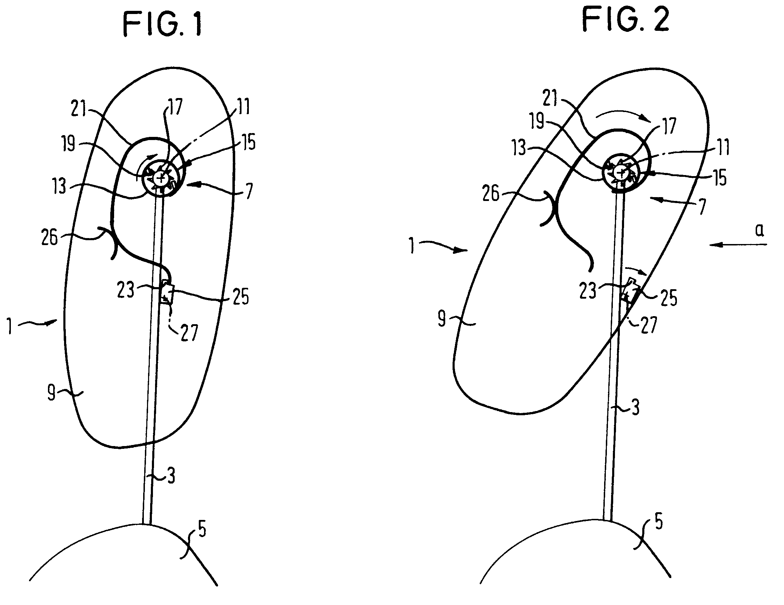

In Fig. 1 ist eine Kopfstütze 1 gezeigt, die ein Gestell 3 mit zwei parallelen Stäben umfaßt, die in entsprechende Aufnahmen in der Rückenlehne 5 eines Fahrzeugsitzes mehr oder weniger tief eingeschoben werden können. Ein Auflageteil 9 ist über ein Schwenklager 7 am Gestell 3 befestigt. Das Schwenklager 7 besteht aus einer am Auflageteil 9 befestigten Drehachse 11 und einem sie umgebenden, gestellfesten Rohr 13, das als Lagerbuchse dient. Im Inneren des Rohres 13 ist eine Sperrvorrichtung in Form eines üblichen Ratschenmechanismus 15 vorgesehen. Dieser umfaßt eine mit der Drehachse 11 verbundene Zahnscheibe 17 sowie eine mit der Zahnscheibe 17 zusammenwirkende Klinke 19, die von der Innenseite des Rohres 13 absteht.

An der Außenseite des Rohres 13 ist eine Biegefeder 21 befestigt, die um das Schwenklager 7 spiralförmig und elastisch gebogen und dadurch gespannt ist. Die Biegefeder 21 greift mit ihrem entgegengesetzten, zweiten, hakenförmig geschwungenen Ende an einer Nase 23 eines Trägheitssensors 25 an. Das Auflageteil 9 liegt mit einer Abstützfläche 26 nahe des zweiten Endes der Biegefeder 21 an dieser an.

Der Trägheitssensor 25 ist um eine Achse 27 relativ zum Fahrzeug nach hinten schwenkbar. Die Masse des Trägheitssensors 25, die Lage seiner Achse 27 und die auf ihn einwirkende Kraft der Biegefeder 21 sind so aufeinander abgestimmt, daß bei einem Heckaufprall, der in Fig. 2 durch den Beschleunigungsvektor a dargestellt ist, eine Verschwenkung des Trägheitssensors 25 aufgrund seiner Massenträgheit in Pfeilrichtung erfolgt. Die Kopfstütze 1 wird somit erst ab einer vorbestimmten Beschleunigung ausgelöst. Durch das Verschwenken des Trägheitssensors 25 in Pfeilrichtung springt das am Trägheitssensor 25 gelagerte Ende der Biegefeder 21 von der Nase 23, so daß die gespeicherte Federenergie schlagartig frei wird. Dabei drückt die Biegefeder 21 gegen die Abstützfläche 26 und schwenkt dadurch und das Auflageteil 9 in Pfeilrichtung nach vorn in Richtung Kopf des Insassen. Die Biegefeder 21 ist zusammen mit dem Schwenklager 7, dem Trägheitssensor 25 und der Abstützfläche 26 Teil einer Einrichtung zum Verschwenken des Auflageteils 9.

Ein nicht gezeigter Anschlag im Inneren des Auflageteils 9 begrenzt die Verschwenkbewegung desselben nach vorn. In der vordersten Stellung verhindert der Ratschenmechanismus 15, daß der auf das Auflageteil 9 auftreffende Kopf ein Zurückschwenken des Auflageteils 9 verursacht. Die Klinke 19 greift hierzu zwischen benachbarte Zähne der Zahnscheibe 17 ein.

Durch den durch die aktive Kopfstütze 1 verringerten Abstand zwischen Kopf und Kopfstütze 1 prallt der Kopf mit einer geringeren Geschwindigkeit auf die Kopfstütze 1 als dies bei einer nicht aktiven Kopfstütze der Fall wäre. Die Nickbewegung des Kopfes kann durch die aktive Kopfstütze 1 wirksam reduziert werden.

Die Kopfstütze 1 muß nach einem Heckaufprall und ihrer Aktivierung nicht durch eine neue Kopfstütze ausgetauscht werden, denn die Biegefeder 21 kann wieder gespannt werden. Hierzu wird zuerst die Klinke 19 außer Eingriff mit der Zahnscheibe 17 gebracht, und anschließend wird das Auflageteil 9 zurück in die Ausgangsstelle geschwenkt. Durch Überdrücken des Auflageteils 9 über die Ausgangsstellung hinaus kann das hakenförmig gebogene Ende der Biegefeder 21 die Nase 23 erfassen und den Trägheitssensor 25 in die in Fig. 1 gezeigte Ausgangsstellung zurückbringen, in der der Trägheitssensor 25 durch einen einseitig wirkenden Anschlag (nicht gezeigt) am weiteren Zurückschwenken im Gegenuhrzeigersinn gehindert wird.

## Patentansprüche

1. Kopfstütze für einen Fahrzeugsitz, mit einem an der Rückenlehne (5) des Fahrzeugsitzes befestigbaren Gestell (3) und einem schwenkbar am Gestell (3) befestigten Auflageteil (9), das bei einem Heckaufprall durch eine an ihm angreifende Einrichtung in Richtung zum Kopf des Fahrzeuginsassen geschwenkt wird, dadurch gekennzeichnet, daß die Einrichtung wenigstens eine in der Kopfstütze (1) integrierte, gespannte Feder (21) umfaßt, die bei einem Heckaufprall entspannt wird und durch die freiwerdende gespeicherte Energie zum Verschwenken des Auflageteils (9) führt.

2. Kopfstütze nach Anspruch 1, gekennzeichnet durch einen in ihr integrierten Anschlag, der die Verschwenkbewegung des Auflageteils (9) nach vorn begrenzt.

3. Kopfstütze nach Anspruch 1 oder 2, gekennzeichnet durch einen Betätigungssensor, der bei einem Heckaufprall dafür sorgt, daß eines der beiden arretierten, entgegengesetzten Enden der gespannten Feder zu ihrer Entspannung freigegeben wird.

4. Kopfstütze nach Anspruch 3, dadurch gekennzeichnet, daß der Betätigungssensor ein aufgrund seiner Massenträgheit schwenkbarer Rasthebel ist.

5. Kopfstütze nach Anspruch 3 oder 4, dadurch gekennzeichnet, daß die Feder eine Biegefeder (21) ist, die mit einem ersten Ende am Gestell (3) arretiert ist und in gespanntem Zustand mit dem entgegengesetzten, zweiten Ende an einem gestellfesten, als Trägheitssensor (25) ausgebildeten Betätigungssensor angreift, der das zweite Ende bei einem Heckaufprall freigibt, und daß die Biegefeder (21) nahe des zweiten Endes an einer Abstützfläche (26) im Auflageteil (9) anliegt.

6. Kopfstütze nach einem der vorstehenden Ansprüche, dadurch gekennzeichnet, daß die Biegefeder (21) um das Schwenklager (7) des Auflageteils (9) gebogen ist.

7. Kopfstütze nach Anspruch 6, dadurch gekennzeichnet, daß die Biegefeder (21) mit ihrem ersten Ende an einer gestellfesten Lagerbuchse arretiert ist, in der eine am Auflageteil (9) befestigte Drehachse (11) gelagert ist.

8. Kopfstütze nach einem der vorstehenden Ansprüche, gekennzeichnet durch eine in der Kopfstütze (1) integrierte Sperrvorrichtung, die das Auflageteil (9) in seiner vordersten Schwenkstellung verriegelt.

9. Kopfstütze nach den Ansprüchen 6 oder 7 und 8, dadurch gekennzeichnet, daß die Sperrvorrichtung als an dem Schwenklager (7) des Auflageteils (9) angebrachter Ratschenmechanismus (15) ausgebildet ist.

10. Kopfstütze nach einem der vorstehenden Ansprüche, dadurch gekennzeichnet, daß die Einrichtung dergestalt ausgebildet ist, daß die Feder (21) nach einer Auslösung der Kopfstütze (1) durch Schwenken des Auflageteils (9) zurück in die Ausgangsstellung wieder gespannt und die Kopfstütze (1) in der Ausgangsstellung verriegelt werden kann.
